# EUROPÄISCHE PATENTSCHRIFT

(11) **EP 1 375 945 B1**
(45) Veröffentlichungstag und Bekanntmachung des Hinweises auf die Patenterteilung: **23.11.2005**
(21) Anmeldenummer: 03009294.4
(22) Anmeldetag: 24.04.2003
(51) Int. Cl.: F16D 13/75

(54) **Reibungskupplung mit einer Drehmomenterfassungsanordnung und einer Verschleisserfassungsanordnung, Drehmomenterfassungsanordnung bzw. Verschleisserfassungsanordnung für eine Reibungskupplung**
Friction clutch having a system for detecting torque and a system for detecting wear, torque-detecting system and wear-detecting system for a friction clutch
Embrayage à friction avec un dispositif de détection d'un couple moteur et un dispositif de détection d'usure, dispositif de détection d'un couple moteur et dispositif de détection d'usure pour véhicule automobile

(30) Priorität: 28.06.2002 DE 10229084
(43) Veröffentlichungstag der Anmeldung: 02.01.2004
(73) Patentinhaber: ZF Sachs AG, 97424 Schweinfurt (DE)
(72) Erfinder: Otto, Thomas, Dr., 97072 Würzburg (DE); Ester, Barbara, Dipl.-Ing., 97422 Schweinfurt (DE)

(56) Entgegenhaltungen:
- WO-A-01/96826
- DE-A- 19 744 044
- FR-A- 2 686 975
- US-A- 4 474 274
- US-A- 4 683 746
- US-B1- 6 259 995

## Beschreibung

Die vorliegende Erfindung bezieht sich im Allgemeinen auf Reibungskupplungen bzw. für diese vorgesehene Drehmomenterfassungsanordnungen und Verschleißerfassungsanordnungen.

In modernen Antriebssystemen werden häufig Reibungskupplungen eingesetzt, die nicht mehr auf direktem mechanischem Wege durch einen Fahrer bedient werden, sondern die unter Ansteuerung eines Stellglieds stehen. Zur korrekten Durchführung von Ein- und Auskuppelvorgängen ist es erforderlich, verschiedene den Betriebszustand einer derartigen Reibungskupplung charakterisierenden Größen zu kennen. So ist es insbesondere in Synchronisation mit den in einer Getriebeanordnung ablaufenden Schaltvorgängen erforderlich, Kenntnis über den momentanen Ein- bzw. Ausrückzustand der Kupplung zu haben. Dies erfolgt im Allgemeinen dadurch, dass der Ausrückweg erfasst wird und vermittels des Ausrückwegs letztendlich dann auf das über die Kupplung übertragene Drehmoment geschlossen wird. Da hier eine Kette mechanisch miteinander zusammenwirkender Bauteile vorhanden ist, welche alle Fertigungstoleranzen aufweisen und welche alle ein bestimmtes Bewegungsspiel bezüglich einander aufweisen können, ist diese Art der Erfassung mit vergleichsweise großen Ungenauigkeiten behaftet, wodurch es schwierig wird, exakt auf den momentanen Ein- bzw. Ausrückzustand der Kupplung zu schließen. Auch hat der Verschleißzustand beispielsweise der in einer Reibungskupplung vorhandenen Reibbeläge einen erheblichen Einfluss auf die Ein- bzw. Auskuppelcharakteristik. Tritt ein derartiger Verschleiß auf, so ändert im Allgemeinen auch ein in der Kupplung vorhandener Kraftspeicher seine Einbaulage und somit seine Kraftcharakteristik, so dass auch der zeitliche Ablauf von Ein- bzw. Auskuppelvorgängen sich ändern kann, wenn keine entsprechenden geänderten Ansteuermaßnahmen im Bereich des Stellglieds auftreten.

Aus der nachveröffentlichten deutschen Patentanmeldung 101 02 373.1 ist ein System bekannt, bei welchem zur Erfassung des über eine Reibungskupplung übertragenen Drehmoments vermittels eines Aufnehmers eine an der Kupplungsabtriebswelle vorgesehene Kodierung abgetastet wird. Diese Kodierung wird durch entsprechende Magnetisierung der Abtriebswelle gebildet, und durch die im Drehmomentübertragungsbetrieb auftretende Verwindung der Abtriebswelle und die damit einhergehende Veränderung im Bereich der Kodierung wird ein Sensorsignal erzeugt, welches letztendlich in Zusammenhang mit dem über die Kupplung übertragenen Drehmoment steht und zur entsprechenden Ansteuerung der Kupplung vermittels eines Stellglieds genutzt werden kann.

Die US 4863746 betrifft ein Verfahren zur Drehmomenterfassung innerhalb einer Reibungskupplung. Zwei innerhalb des Drehmomentsflusses relativ zueinander bewegliche Bauteile, von denen ein erstes Bauteil ein Zahnprofil und ein zweites Bauteil einen Sensor trägt, erzeugen ein Signal der relativen Position der besagten Bauteile zueinander.

*Aus der WO 01*/*96826 A ist eine Drehmomenterfassungsanordnung zur Erfassung einer* mit *einem über eine Welle übertragenen Drehmoment in Zusammenhang stehenden Größe bekannt. Die Drehmomenterfassungsanordung umfasst einen Aufnehmerbereich, der eine an der Welle vorgesehene Kodierung sensiert. Die Kodierung wird durch eine lokale Magnetisierung eines dem Aufnahmebereich gegenüberliegenden Bereichs der Welle gebildet.*

Es ist die Aufgabe der vorliegenden Erfindung, eine Drehmomenterfassungsanordnung für eine Reibungskupplung bzw. eine derartige Anordnungen enthaltende Reibungskupplung vorzusehen, vermittels welcher in einfacher und zuverlässiger Art und Weise auf das über eine Reibungskupplung übertragene Drehmoment einer Reibungskupplung geschlossen werden kann.

Erfindungsgemäß wird die Aufgabe durch die Merkmale des Patentanspruchs 1 gelöst.

Ein wesentlicher Aspekt der vorliegenden Erfindung ist, dass die Sensierung des übertragenen Drehmoments bzw. einer damit in Zusammenhang stehenden Größe, wie z.B. der Verwindung eines im Momentenfluss liegenden Bauteils, nicht mehr bezüglich einer Abtriebswelle erfolgt, sondern bezüglich eines Bereichs der Kupplungsscheibe. Dies vereinfacht den Vorgang des Herstellens der Kodierung, da nicht mehr das relativ große Bauteil Abtriebswelle bearbeitet bzw. aus einem speziellen Material hergestellt werden muss, sondern das vergleichsweise einfach handhabbare Bauteil Kupplungsscheibe. Etwaige Verschmutzungen oder Ablagerungen beeinträchtigen bei derartiger Ausgestaltung die Erfassungsgenauigkeit des Systems nicht.

Hier kann beispielsweise vorgesehen sein, dass die Kodierung an einem in axialer Richtung langgestreckten, zur Drehkopplung mit der Abtriebswelle vorgesehenen Nabenbereich der Kupplungsscheibe vorgesehen ist und dass der Aufnehmerbereich radial außerhalb des Nabenbereichs vorgesehen ist.

Um in einfacher Art und Weise die Positionierung des Aufnehmerbereichs zur entsprechenden Abtastung der Kodierung erhalten zu können, kann vorgesehen sein, dass der Aufnehmerbereich an einem feststehenden Bauteil eines Ausrückermechanismus vorgesehen ist.

Nachfolgend wird mit Bezug auf die beiliegenden Zeichnungen die vorliegende Erfindung detailliert beschrieben. Es zeigt:
- Fig. 1: eine Teil-Längsschnittansicht einer die Erfindungsprinzipien enthaltenden Reibungskupplung; enthaltenden Reibungskupplung;
- Fig. 2: eine abgewandelte Ausgestaltungsform der in Fig. 1 dargestellten Reibungskupplung.

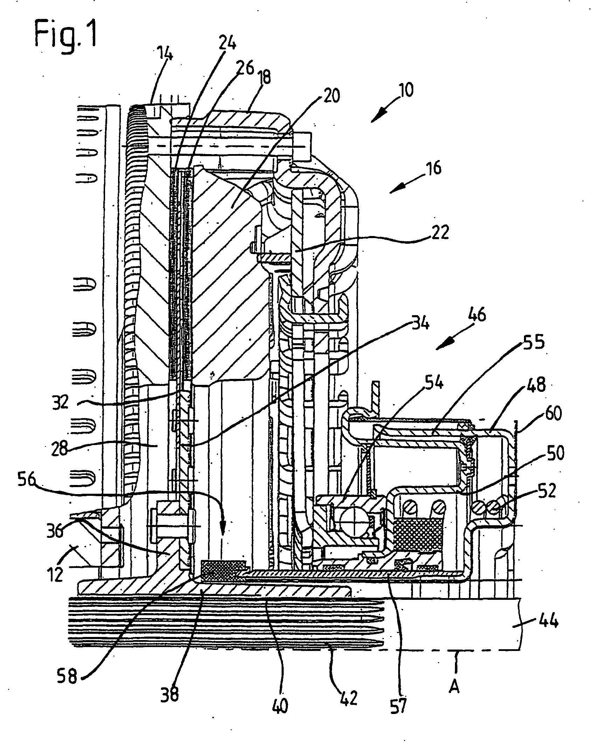

Die in Fig. 1 erkennbare Reibungskupplung 10 umfasst allgemein ein mit einer Antriebswelle 12 zur gemeinsamen Drehung gekoppeltes oder koppelbares Schwungrad 14 sowie eine im radial äußeren Bereich mit dem Schwungrad 14 drehfest verbundene Druckplattenbaugruppe 16. Diese weist ein Gehäuse 18 auf, in welchem eine Anpressplatte 20 beispielsweise vermittels Tangentialblattfedern o.dgl. axial verlagerbar, im Wesentlichen jedoch drehfest gehalten ist. Ein Kraftspeicher, beispielsweise in Form einer Membranfeder 22, beaufschlagt die Anpressplatte 20 in Richtung auf das Schwungrad 14 zu, so dass im eingerückten Zustand der Kupplung 10 die Reibbeläge 24, 26 einer Kupplungsscheibe 28 zwischen jeweiligen Reibflächen des Schwungrads 14 und der Anpressplatte 20 geklemmt werden. Die Kupplungsscheibe 28 kann von herkömmlichem Aufbau sein und einen beispielsweise mit Belagfederung versehenen Belagträgerbereich 32 aufweisen. Dieser kann an einem ringscheibenartigen Teil 34 durch Vernietung festgelegt sein, welches Teil 34 selbst durch Vernietung wiederum an einem Radialflansch 36 eines in Richtung einer Drehachse A langgestreckten, näherungsweise zylinderartig ausgebildeten Nabenbereichs 38 festgelegt sein kann. Selbstverständlich kann das Teil 34 mit dem Radialflansch 36 auch integral ausgebildet sein. Des Weiteren ist es selbstverständlich, dass die Kupplungsscheibe 28 nach herkömmlicher Art und Weise einen Drehschwingungsdämpfungsbereich aufweisen kann.

In seinem Innenumfangsbereich weist der Nabenbereich 38 eine in Richtung der Achse A langgestreckte Verzahnung 40 auf, welche mit einer entsprechenden Verzahnung 42 an einer Abtriebswelle 44, beispielsweise Getriebeeingangswelle, in drehfestem Eingriff steht, jedoch eine Axialverlagerung der Kupplungsscheibe 28 zulässt.

Ein allgemein mit 46 bezeichneter Ausrückermechanismus weist einen an einer Getriebegehäusewand o. dgl. festlegbaren ringartig ausgebildeten Ausrückerzylinder 48 auf, in welchem fluiddicht ein entsprechend ringartig ausgebildeter Ausrückerkolben 50 vorgesehen ist. Der Ausrückerkolben 50 ist mit einem daran vorgesehenen Ausrücklager 54 durch eine Vorspannfeder 52 in feste Anlage gegen den radial inneren Bereich des Kraftspeichers 22 vorgespannt. Sowohl gegen einen radial äußeren zylindrischen Abschnitt 55 des Ausrückerzylinders 48 als auch gegen einen radial inneren zylindrischen Abschnitt 57 ist der Ausrückerkolben 50 durch entsprechende Dichtungsanordnungen fluiddicht abgeschlossen. Durch Einleitung von Druckfluid, beispielsweise Druckluft oder Druckflüssigkeit, wird der Ausrückerkolben 50 aus dem Ausrückerzylinder 48 herausgeschoben, so dass bei dem dargestellten Beispiel einer gedrückten Kupplung die Membranfeder 22 ihre Beaufschlagung der Anpressplatte 20 zumindest teilweise aufhebt und somit die Kupplung in einen Ausrückzustand gebracht werden kann.

Die Reibungskupplung 10 weist ferner eine Drehmomentsensoranordnung 56 auf. Diese umfasst einen allgemein mit 58 bezeichneten Aufnehmerbereich, welcher im dargestellten Beispiel an dem radial inneren zylindrischen Abschnitt 57 des Ausrückerzylinders 48 beispielsweise durch Verrastung, Verklebung o. dgl. festgelegt ist. Der Aufnehmerbereich 58 ist ringartig ausgebildet und umgibt den in Achsrichtung langgestreckten, zylinderartig ausgebildeten Nabenbereich 38 im Wesentlichen vollständig. An dem durch den Aufnehmerbereich 58 axial überdeckten Abschnitt des Nabenbereichs 38 weist dieser eine durch permanente Magnetisierung gebildete Kodierung auf. Diese kann beispielsweise durch zwei in axialem Abstand innerhalb des Aufnehmerbereichs 58 vorgesehene Spulen abgetastet werden. Eine im Drehmomentübertragungsbetrieb induzierte Verwindung des Nabenbereichs 38 führt zu einer entsprechenden Verformung oder/und Bewegung der Kodierung, so dass in den beiden in axialem Abstand liegenden Spulen unterschiedliche Signale bzw. zeitlich versetzte Signale erzeugt werden, die dann einen Rückschluss auf das über diese Kupplungsscheibe 28 übertragene Drehmoment zulassen. Sensoranordnungen, welche an Bauteilen durch Magnetisierung gebildete Kodierungen erfassen können, werden beispielsweise durch die Firma FAST Technology AG, München, vertrieben.

Ein wesentlicher Vorteil der erfindungsgemäßen Anordnung ist, dass die Kodierung, also eine permanent vorhandene Magnetisierung, an einem vergleichsweise einfach herzustellenden und handzuhabenden Bauteil, nämlich dem Nabenbereich 38 der Kupplungsscheibe 28, vorgesehen wird. Dieses vergleichsweise kleine Bauteil lässt sich leicht in einer entsprechenden Vorrichtung lokal permanent magnetisieren und gestattet in einfacher Art und Weise eine Erfassung einer direkt mit dem übertragenen Drehmoment in Zusammenhang stehenden Größe.

Die elektrische Verbindung des Aufnehmerbereichs 58 mit einer Steuereinrichtung, welche das entsprechende Signal dann auswertet, kann über ein in der Fig. 1 erkennbares Kabel 60 erfolgen, kann jedoch auch funktechnisch erfolgen. Es sei darauf hingewiesen, dass selbstverständlich bei andersartig ausgestalteten Ausrückermechanismen der Aufnehmerbereich 58 in anderer Art und Weise positioniert bzw. im Drehbetrieb nicht drehbar gehalten werden kann. Insbesondere kann im Falle der Betätigung der Kupplung mit Ausrückergabel dieses Bauteil auf dem Führungsrohr des Ausrückers selbst getragen sein.

Selbstverständlich ist es bei der in Fig. 1 dargestellten Ausgestaltungsform auch möglich, nicht einen axial langgestreckten Bereich mit Kodierung zu versehen, sondern einen flanschartigen, radial orientierten Bereich zu kodieren und diesen mit einem ebenfalls in Radialrichtung langgestreckten Aufnehmerbereich abzutasten. Auch der radiale Bereich wird in Umfangsrichtung verzerrt werden, wenn über die Kupplungsscheibe ein Drehmoment übertragen wird. Dies kann erfasst und zur Erzeugung eines der Drehmomentenübertragung entsprechenden Signals genutzt werden.

Bei der vorangehend beschriebenen und in Figur 1 dargestellten Ausgestaltungsform kann alternativ oder zusätzlich zur Erfassung des übertragenen Drehmoments vermittels des Aufnehmerbereichs 58 und der diesem zugeordneten Kodierung, beispielsweise permanent magentische Kodierung, auch Information über den Verschleißzustand erlangt werden. Verschiebt sich die Kodierung axial bezüglich des Aufnehmerbereichs 58, so kann dies beispielsweise zu einem veränderten Überlapp der Kodierung mit den zugeordneten Erfassungsspulen führen, was sich beispielsweise in einer Änderung der Signalamplitude bemerkbar machen kann. Eine derartige Änderung steht dann im Zusammenhang mit dem die Veränderung der Axiallage der Kupplungsscheibe 28 hervorrufenden Abrieb im Bereich der Reibbeläge 24, 26. Es kann somit Information über den aktuellen Verschleißzustand erhalten werden.

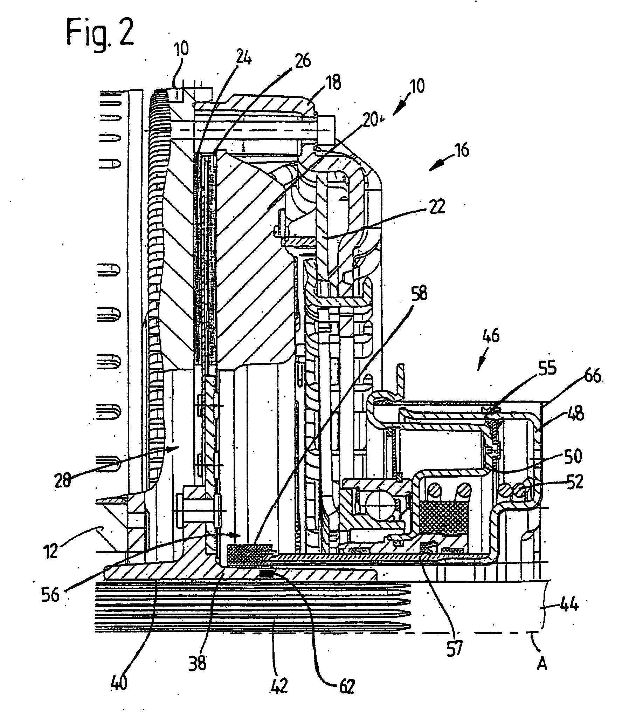

Bei der in Fig. 2 dargestellten Variante, welche in ihrem Grundaufbau der vorangehend beschriebenen Anordnung entspricht, ist zur Erfassung des über die Kupplungsscheibe 28 übertragenen Drehmoments noch die Option bereitgehalten, auch die axiale Positionierung bzw. die Axialverlagerung der Kupplungsscheibe 28 zu erfassen. Zu diesem Zwecke ist an dem Nabenbereich 38 der Kupplungsscheibe 28 ein permanent magnetischer Signalgeberbereich 62 vorhanden. Dies kann ein in den Nabenbereich eingesetzter Permanentmagnet sein, kann jedoch auch ein durch entsprechende Kodierung oder Magnetisierung gebildeter Materialbereich des Nabenbereichs 38 sein. Im Aufnehmerbereich 58 ist eine entsprechende Anordnung bereitgehalten, beispielsweise wiederum eine Magnetspule, welche auf induktivem Wege die Axiallage des Signalgeberbereichs 62 erkennt. Diese Axiallage korrespondiert mit der Axiallage der gesamten Kupplungsscheibe, die bei Abrieb der Reibbeläge 24, 26 sich ändert. Es kann somit unmittelbar an dem verschleißbedingt sich verlagernden Bauteil, nämlich der Kupplungsscheibe 28, mit dem Verschleiß in Zusammenhang stehende Information gewonnen werden, die dann in entsprechender Weise, beispielsweise zur veränderten Ansteuerung eines Stellglieds, genutzt werden kann. Von wesentlichem Vorteil ist hier, dass die Erfassung des Verschleißes nicht mittelbar über die Zwischenschaltung mechanisch miteinander wechselwirkender Bauteile erlangt wird, die alle eine Fertigungstoleranz und ein gegenseitiges Bewegungsspiel aufweisen können und somit nur eine vergleichsweise ungenaue Erfassung des Verschleißes zulassen. Aufgrund der sehr genauen Erfassung des aufgetretenen Verschleißes ermöglicht die erfindungsgemäße Ausgestaltung die Reduzierung des Sicherheitsmindestmaßes der verschleißbelasteten Reibbeläge, ohne dass die Gefahr der Beschädigung irgendwelcher Komponenten besteht. Es kann somit der Zeitbereich, über welchen hinweg eine einzige Kupplungsscheibe 28 eingesetzt wird, verlängert werden. Ist ein maximal zulässiger Verschleiß erreicht, kann ein entsprechendes Warnsignal erzeugt werden, das darauf hinweist, dass nunmehr die Kupplungsscheibe ausgetauscht werden muss.

Durch die erfindungsgemäße Sensierung im Bereich der Kupplungsscheibe wird es also möglich, bei einer Reibungskupplung relevante Informationen auf direktem Wege zu erfassen, d.h. unter Vermeidung der Gefahr der Verfälschung der Information, so dass auch Ansteuermaßnahmen oder Sicherheitsmaßnahmen mit größerer Genauigkeit bzw. zu geeigneteren Zeitpunkten durchgeführt werden können.

## Patentansprüche

1. Reibungskupplung mit einer Drehmomenterfassungsanordnung zur Erfassung einer mit einem übertragenen Drehmoment in Zusammenhang stehenden Größe, wobei die Reibungskupplung (10) eine mit einer Abtriebswelle (44) zur gemeinsamen Drehung gekoppelte oder koppelbare Kupplungsscheibe (28) aufweist, umfassend einen im Drehmomentübertragungszustand nicht mit der Kupplungsscheibe (28) drehbaren Aufnehmerbereich (58) sowie eine zur Erzeugung eines mit dem übertragenen Drehmoment in Zusammenhang stehenden Sensorsignals durch den Aufnehmerbereich (58) abtastbare, an der Kupplungsscheibe (28) vorgesehene Kodierung **dadurch gekennzeichnet, dass** die Kodierung durch wenigstens lokales Magnetisieren eines dem Aufnehmerbereich (58) gegenüber liegenden Bereiches (38) der Kupplungsscheibe (28) gebildet ist.

2. Reibungskupplung nach Anspruch 1,
**dadurch gekennzeichnet, dass** die Kodierung an einem in axialer Richtung langgestreckten, zur Drehkopplung mit der Abtriebswelle (44) vorgesehenen Nabenbereich (38) der Kupplungsscheibe (28) vorgesehen ist und dass der Aufnehmerbereich (58) radial außerhalb des Nabenbereichs (38) vorgesehen ist.

3. Reibungskupplung nach Anspruch 1 oder 2,
**dadurch gekennzeichnet, dass** der Aufnehmerbereich (58) an einem feststehenden Bauteil (57) eines Ausrückermechanismus (46) vorgesehen ist.

4. Reibungskupplung nach Anspruch 3,
**dadurch gekennzeichnet, dass** das feststehende Bauteil (57) einen Teil eines Ausrückerzylinders (48) einer Ausrück-Kolben/Zylinder-Anordnung umfasst.

## Claims

1. Friction clutch having a torque-sensing arrangement for sensing a variable which relates to a transmitted torque, the friction clutch (10) having a clutch plate (28) which is coupled or can be coupled to an output shaft (44) to rotate with it, comprising a sensor region (58) which cannot rotate with the clutch plate (28) in the torque transmission state, and a coding which is provided on the clutch plate (28) and can be sensed by the sensor region (58) in order to generate a sensor signal which relates to the transmitted torque, **characterized in that** the coding is formed by a region (38) of the clutch plate (28) which lies opposite the sensor region (58) being magnetized at least locally.

2. Friction clutch according to Claim 1, **characterized in that** the coding is provided on a hub region (38) of the clutch plate (28), which hub region (38) is elongated in the axial direction and is provided for rotational coupling to the output shaft (44), and **in that** the sensor region (58) is provided radially outside the hub region (38).

3. Friction clutch according to Claim 1 or 2, **characterized in that** the sensor region (58) is provided on a stationary component (57) of a disengagement mechanism (46).

4. Friction clutch according to Claim 3, **characterized in that** the stationary component (57) encloses a part of a release cylinder (48) of a release piston/cylinder arrangement.

## Revendications

1. Accouplement à friction qui présente un dispositif de détection du couple de rotation qui détecte une grandeur liée à un couple de rotation transmis, l'accouplement à friction (10) présentant un disque d'accouplement (28) qui est accouplé ou apte à être accouplé à un arbre entraîné (44) pour tourner conjointement avec ce dernier et qui comprend une zone réceptrice (58) qui ne peut pas tourner avec le disque d'accouplement (28) lors de la transmission du couple de rotation ainsi qu'un codage agencé sur le disque d'accouplement (28), qui crée un signal de détection associé au couple de rotation transmis et lisible par la zone réceptrice (58), **caractérisé en ce qu'**on forme le codage en magnétisant au moins localement une zone (38) du disque d'accouplement (28) située face à la zone réceptrice (58).

2. Accouplement à friction selon la revendication 1, **caractérisé en ce que** le codage est prévu sur une partie de moyeu (38) du disque d'accouplement (28), partie qui s'étend dans la direction axiale et qui est prévue pour être accouplée à rotation avec l'arbre entraîné (44) et **en ce que** la zone réceptrice (58) est prévue radialement à l'extérieur de la partie de moyeu (38).

3. Accouplement à friction selon les revendications 1 ou 2, **caractérisé en ce que** la zone réceptrice (58) est prévue sur la partie fixe (57) d'un mécanisme de désaccouplement (46).

4. Accouplement à friction selon la revendication 3, **caractérisé en ce que** la partie fixe (57) comprend une partie du cylindre de désaccouplement (48) d'un dispositif de désaccouplement à piston et cylindre.
